# EUROPEAN PATENT APPLICATION

(11) **EP 3 643 569 A1**
(43) Date of publication of application: **29.04.2020**
(21) Application number: 18201934.9
(22) Date of filing: 23.10.2018
(51) Int. Cl.: B60R 25/31, B60R 25/25

(54) **METHOD FOR ACCESSING AND STARTING A VEHICLE**

(71) Applicant: DURA Automotive Holdings U.K., Ltd., Birmingham, B35 7AG (GB)
(72) Inventor: DURAND, Eric, 78430 LOUVECIENNES (FR); FARGES, Thomas, 91940 GOMETZ LE CHATEL (FR); BITAULD, Lionel, 91190 GIF SUR YVETTE (FR); BOSNJAK, Joseph, 78760 JOUARS PONTCHARTRIN (FR)
(74) Representative: Cabinet Laurent & Charras

(57) **Abstract**

The invention concerns a method for accessing and starting a vehicle (1), comprising the following steps: a) a wireless communication is established between the vehicle (1) and a personal device (3) of a user (2); b) a first operation performed by the user (2) with the personal device (3) allows access to the vehicle (1); and c) a second operation performed by the user (2) starts the vehicle (1).

## Description

### TECHNICAL FIELD OF THE INVENTION

The invention concerns a method for accessing and starting a vehicle.

### BACKGROUND OF THE INVENTION

Several systems and methods are known to provide access to a vehicle.

Classically, a vehicle comprises at least one door provided with a lock. The driver inserts a key into the lock to unlock it, open the door and enter the vehicle.

Alternately or additionally, a vehicle can be provided with a keyless entry system to offer a user more convenient access to the vehicle.

Another known solution is the use of a keypad equipping the vehicle. In order to access the vehicle, a user needs just to know a passcode.

Moreover, several systems and methods are known to start to a vehicle.

Classically, the driver inserts the key in an ignition switch, then turn the key to start the engine.

Alternately or additionally, a vehicle can be provided with a keyless starting system, such as a start/stop button.

### SUMMARY OF THE INVENTION

The aim of the invention is to provide practical methods for accessing and starting a vehicle.

To this end, the invention concerns a method for accessing and starting a vehicle, comprising the following steps: a) a wireless communication is established between the vehicle and a personal device of a user; b) a first operation performed by the user with the personal device allows access to the vehicle; and c) a second operation performed by the user starts the vehicle.

Thanks to the invention, the user can access and start the vehicle with simple and practical operations, by using the personal device and/or dedicated devices equipping the vehicle.

According to various aspects of the invention, which are advantageous but not compulsory, such a method may incorporate one or several of the following features:
- The personal device is a smartphone.
- The wireless communication is established between the personal device and a NFC reader equipping the vehicle.
- The NFC reader is integrated to a pillar capping of the vehicle.
- The wireless communication is established between the personal device of the user and a 3G, 4G or Bluetooth system equipping the vehicle.
- The first operation consists in positioning the personal device in a detection area of the vehicle. Preferably, the detection area is defined by a NFC reader.
- The first operation consists in sending a pin code to the personal device, then the user enters the pin code on a capacitive keypad equipping the vehicle, then the pin code is checked by the vehicle before allowing access.
- The first operation consists in entering a pin code on the personal device, then the pin code is sent to the vehicle for checking before allowing access.
- The second operation is performed by using an inner device equipping the vehicle.
- The inner device of the vehicle is a start/stop button.
- The start/stop button is located in a driver area of the vehicle.
- Performing the first operation starts a countdown, then the second operation must be performed before the end of the countdown to start the vehicle.
- The inner device of the vehicle is a fingerprint reader.
- The fingerprint reader is integrated to a shifter equipping the vehicle.
- The fingerprint reader is connected to an ECU of the vehicle via a CAN bus.
- The fingerprint is deleted from the vehicle memory after a match is established.
- The inner device of the vehicle is a face recognition system.
- A first picture of the user is sent to the vehicle, then the second operation is performed by sitting in the driver seat, then the face recognition system captures a second picture of the user, then the vehicle starts if a match is established between the first picture and the second picture.
- The face recognition system captures a first picture of the user performing the first operation, then the second operation is performed by sitting in the driver seat, then the face recognition system captures a second picture of the user, then the vehicle starts if a match is established between the first picture and the second picture.
- The first picture is captured by a first camera of the face recognition system, and the second picture is captured by a second camera of the face recognition system. For example, the first camera is integrated to the B-pillar, while the second camera is located in a driver area of the vehicle. Preferably, the first picture is sent to the ECU of the vehicle via NFC communication.
- The first picture and second picture are captured by a single mobile camera located in a driver area of the vehicle.
- The pictures are deleted from the vehicle memory after the match is established.
- The second operation is performed on a face recognition system equipping the personal device.
- The personal device sends results of the face recognition to the vehicle via Bluetooth communication.
- The second operation is performed by using the personal device and at least one inner device equipping the vehicle.
- The second operation is performed by using the personal device and a NFC reader equipping the vehicle and configured to detect the personal device.
- The NFC reader is located in a driver area of the vehicle.
- The NFC reader is integrated to a central console of the vehicle.
- The NFC reader detects the personal device, then a start/stop button is displayed on the personal device, then the second operation is performed by pressing said start/stop button on the personal device.
- The second operation is performed by positioning the personal device in a predetermined location inside the vehicle, where the NFC reader detects the personal device, thus starting the vehicle.
- The personal device is positioned in a predetermined location inside the vehicle, where a NFC reader detects the personal device, then the second operation is performed by pressing a start/stop button equipping the vehicle.
- The battery of the personal device is charged when positioned in the predetermined location.
- The second operation is performed by using the personal device and a touchscreen equipping the vehicle.
- The personal device sends a personal data to the vehicle when the user performs the first operation, then the touchscreen requests the personal data, then the second operation is performed by entering the personal data on the touchscreen.
- The vehicle sends a pin code to the personal device when the user performs the first operation, then the touchscreen requests the pin code, then the second operation is performed by entering the pin code on the touchscreen.
- At least one additional condition must be met while performing the second operation to start the vehicle.
- The at least one additional condition includes pressing the brake pedal of the vehicle while performing the second operation.
- The at least one additional condition includes that the transmission system of the vehicle is in a park position while performing the second operation.
- In some embodiments, all steps of the method are performed without manual operation of the user on the vehicle.

### BRIEF DESCRIPTION OF THE DRAWINGS

The invention will now be explained in correspondence with the annexed figures, and as an illustrative example, without restricting the object of the invention. In the annexed figures:
- Figure 1 is a schematic view, from above, of a vehicle designed for implementing the method according to the invention, with a vehicle user holding a personal device;
- Figure 2 is a front view of a b-pillar according to a first embodiment, provided with a NFC reader for establishing a wireless communication with the personal device of the vehicle user;
- Figure 3 is a front view of a b-pillar according to a second embodiment, provided with a capacitive keypad;
- Figure 4 is a partial schematic view, from above, of the vehicle of Figure 1, designed for implementing the method according to the invention, with a vehicle user seating in the driver seat;
- Figure 5 is a front view of a start/stop button equipping the vehicle;
- Figure 6 is a perspective view of a fingerprint reader integrated to a shifter equipping the vehicle;
- Figure 7 is a perspective view of the driver area provided with a facial recognition system;
- Figure 8 is a front view of the personal device provided with a facial recognition system;
- Figure 9 is a perspective view of a dedicated location for positioning the personal device inside the vehicle;
- Figure 10 is a perspective view of the dedicated location of Figure 9, with the personal device displaying a start/stop button; and
- Figure 11 is a perspective view of a touchscreen equipping the vehicle.

### DETAILED DESCRIPTION OF SOME EMBODIMENTS

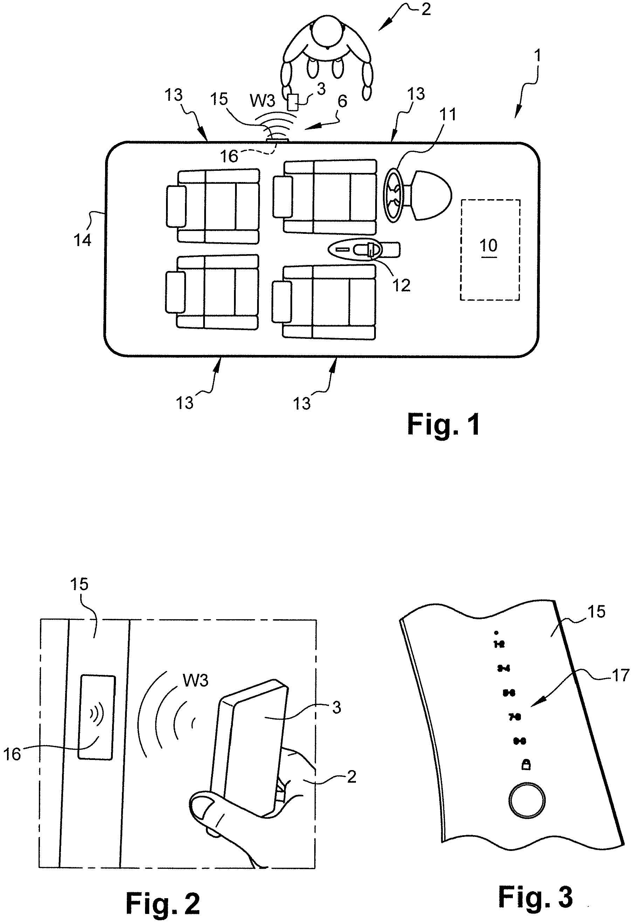

Figure 1 shows a vehicle (1) comprising an engine (10), a steering wheel (11), a shifter (12), several doors (13) and a rear trunk (14). Preferably, the vehicle also comprises an electronic central unit ECU not shown. On the driver side, vehicle (1) comprises a B-pillar (15) integrating a NFC reader (16).

Standing next to the vehicle (1) is represented a vehicle user (2) equipped with a portable personal device (3), such as a smartphone. Alternatively, the personal device (3) may be a smart card, a key-fob, a tablet, a smartwatch, a laptop, or another similar device.

According to the invention, the method for accessing and starting the vehicle (1) comprises the following steps:
a) a wireless communication (W3) is established between the vehicle (1) and the personal device (3) of the user (2);
b) a first operation performed by the user (2) with the personal device (3) allows access to the vehicle (1); and
c) a second operation performed by the user (2) starts the vehicle (1).

Different embodiments of the method are described here-after. Similar elements have the same references and work in the same way.

Figure 2 shows the B-pillar (15) according to a first embodiment, provided with a NFC reader (16) for establishing a wireless communication (W3) with the personal device (3) of the user (2).

In this embodiment, steps a) and b) are performed simultaneously. The first operation consists in positioning the personal device (3) in a detection area (6) defined by the NFC reader (16). Thus, the wireless communication (W3) is established between the personal device (3) and the NFC reader (16). If the personal device (3) is recognized by the vehicle (1), then access to the vehicle (3) is allowed. The user (3) and other persons can open the doors (13) and trunk (14).

Figure 3 is a front view of a b-pillar (15) according to a second embodiment, provided with a capacitive keypad (17).

Preferably, the wireless communication (W3) is established between the personal device (3) and a 3G, 4G or Bluetooth system equipping the vehicle (1).

Steps a) and b) are performed separately.

For example, the first operation may consist in sending a pin code to the personal device (3), then the user (2) enters the pin code on the capacitive keypad (17), then the pin code is checked by the ECU before allowing access.

According to another example, the first operation may consist in entering a pin code on the personal device (3), then the pin code is sent to the ECU for being checked before allowing access.

The pin code can be provided to the user (2) by different ways and at different times. The pin code can be provided at a registration center, downloaded from an online application, or sent to the personal device (3) when establishing the wireless communication (W3) with the vehicle (1).

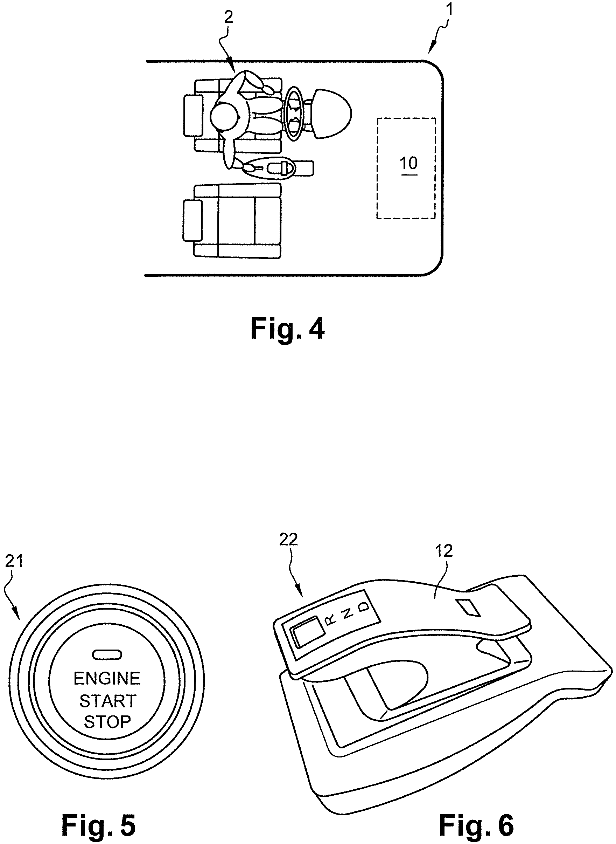

Figures 5 to 7 shows different embodiments for performing the second operation, by using an inner device (21, 22, 23) equipping the vehicle (1).

Figure 5 shows a start/stop button (21), which can be pressed by the user (2) to perform the second operation. Classically, the start/stop button (21) is located in the driver area of the vehicle (1).

In a particular embodiment, the ECU starts a countdown when the user (2) performs the first operation, then the second operation has to be performed before the end of the countdown to start the vehicle (1). Preferably, the countdown can be modified by the user (2) inside the vehicle (1) and/or from the personal device (3). For example, the countdown is initially set on 30 seconds, but may be set between 5 seconds to 1 minute.

Figure 6 shows a fingerprint reader (22) integrated to the shifter (12). Alternately, the fingerprint reader (22) may be arranged in another location of the vehicle (1). The second operation is performed by reading a fingerprint of the user (2) with the fingerprint reader (22), then comparing the read fingerprint with a reference fingerprint. For example, said reference fingerprint may be registered at a registration center. The vehicle (3) starts if a match is established between the fingerprints. Preferably, the fingerprints are deleted from the vehicle memory after the match is established.

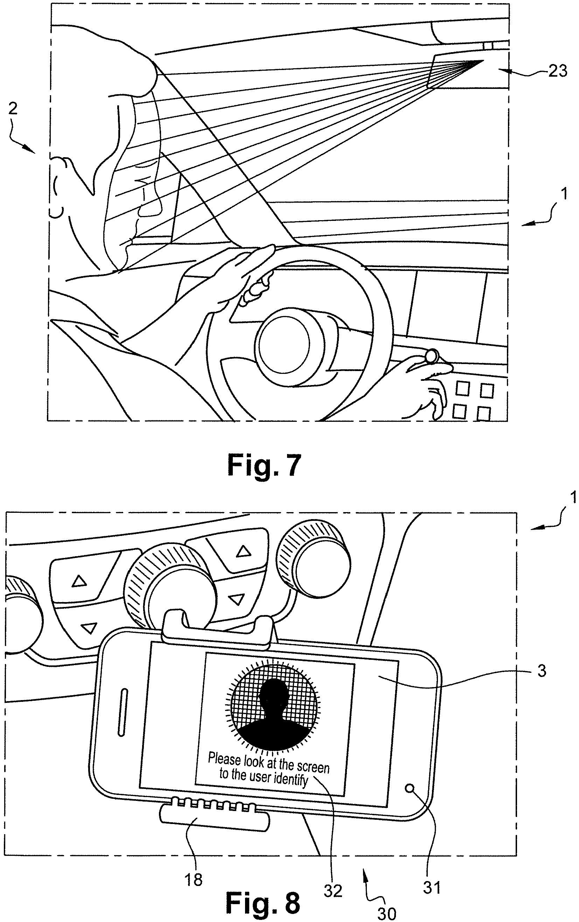

Figure 7 shows the driver area of the vehicle (1) provided with a facial recognition system (23), including a camera integrated to the rearview mirror.

In a first embodiment, a first picture of the user (2) is previously sent to the vehicle (1). For example, this first picture can be registered at a registration center. The second operation is performed when the user (2) sits in the driver seat, where the face recognition system (23) captures a second picture of the user (3). The vehicle (1) starts if a match is established between the first picture and the second picture.

In a second embodiment, the face recognition system (23) captures a first picture of the user (3) performing the first operation. The second operation is performed when the user (2) sits in the driver seat, where the face recognition system (23) captures a second picture of the user. The vehicle (1) starts if a match is established between the first picture and the second picture.

In the second embodiment, the first picture and second picture may be captured by a single mobile camera located in a driver area of the vehicle (1).

Alternately, the first picture may be captured by a first camera, while the second picture may be captured by a second camera, of the face recognition system (23). For example, the first camera is integrated to the B-pillar (15), while the second camera is located in a driver area of the vehicle (1).

Preferably, the pictures are deleted from the vehicle memory after the match is established.

Figure 8 shows the personal device (3) positioned on a holder (18) inside the vehicle (1). The personal device (3) is equipped with a face recognition system (30) comprising a camera (31) and a screen (32) for displaying the face of the user (3). The second operation is performed on the face recognition system (30) equipping the personal device (3).

In a first embodiment, a first picture of the user (2) is registered in an online application. For example, this first picture can be registered at a registration center. The second operation is performed when the user (2) takes a second picture with the face recognition system (30). The second picture is compared with the first picture, then the results of the face recognition are sent to the vehicle (1).

In a second embodiment, a first picture of the user (2) is sent to the personal device (3), for example via a dedicated application. For example, this first picture can be registered at a registration center. The second operation is performed when the user (2) takes a second picture with the face recognition system (30). The second picture is compared with the first picture, then the results of the face recognition are sent by the personal device (3) to the vehicle (1) via Bluetooth communication.

In a third embodiment, a first picture of the user (2) is sent to the vehicle (1). For example, this first picture can be registered at a registration center. The second operation is performed when the user (2) takes a second picture with the face recognition system (30). The second picture is sent to the vehicle (1) to be compared with the first picture.

In all embodiments, the vehicle (1) starts if a match is established between the first picture and the second picture.

According to other embodiments, the second operation is performed by using the personal device and at least one inner device equipping the vehicle. Preferably, pictures are deleted from the vehicle memory after the match is established.

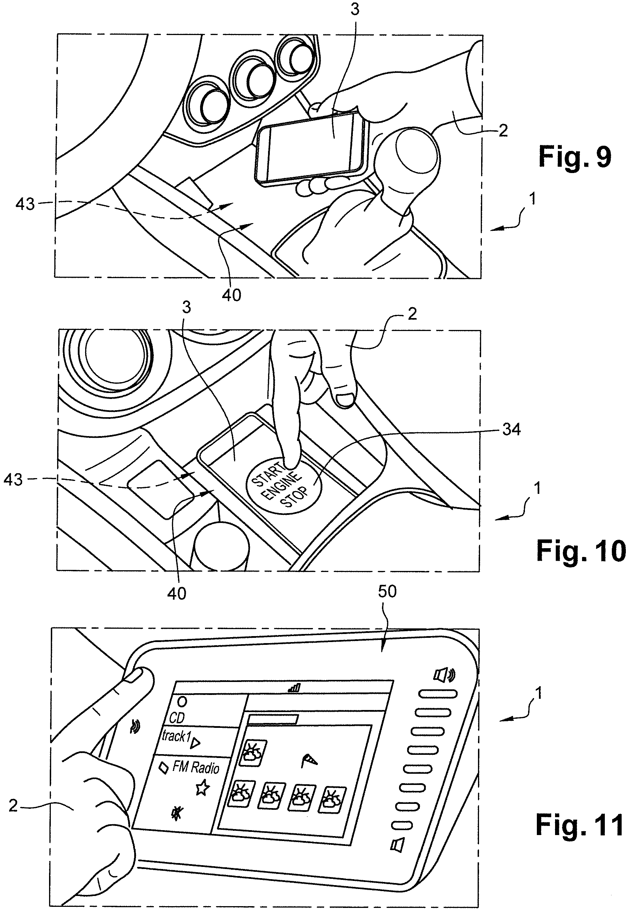

Figures 9 and 10 show a central console constituting a dedicated location (40) for positioning the personal device (3) inside the vehicle (1). The dedicated location (40) is equipped with a NFC reader (43) configured to detect the personal device (3).

In a first embodiment, the NFC reader (43) detects the personal device (3), then a start/stop button (34) is displayed on the personal device (3), then the second operation is performed by pressing said start/stop button (34) on the personal device (3) as shown on Figure 10.

In a second embodiment, the second operation is performed simply by positioning the personal device (3) in the predetermined location (40) inside the vehicle, where the NFC reader (43) detects the personal device (3), thus starting the vehicle (1).

In a third embodiment, the personal device (3) is positioned in the predetermined location (40) inside the vehicle (1), where a NFC reader (43) detects the personal device (3), then the second operation is performed by pressing a start/stop button (21) such the one of Figure 5.

Preferably, the battery of the personal device (3) can be charged when positioned in the predetermined location (40).

Figure 11 shows a touchscreen (50) equipping the vehicle (1).

In a first embodiment, the personal device (3) sends a personal data to the vehicle (1) when the user (2) performs the first operation, then the touchscreen (50) requests the personal data, then the second operation is performed by entering the personal data on the touchscreen (50).

In a second embodiment, the vehicle (1) sends a pin code to the personal device (3) when the user (2) performs the first operation, then the touchscreen (50) requests the pin code, then the second operation is performed by entering the pin code on the touchscreen (50).

Preferably, at least one additional condition must be met while performing the second operation to start the vehicle (1). For example, the additional conditions may include pressing the brake pedal of the vehicle (1) while performing the second operation. Additionally or alternately, the additional conditions may include that the transmission system of the vehicle (1) is in a park position while performing the second operation.

In the embodiments of figures 2 and 7 to 10, the user (2) may perform all steps of the method without any manual operation on the vehicle (1).

In the embodiments of figures 3, 5, 6 and 11, the method is performed with some manual operations of the user (2) on the vehicle (1).

Other non-shown embodiments can be implemented within the scope of the invention. In addition, technical features of the different embodiments can be, in whole or part, combined with each other. Thus, the method can be adapted to specific vehicles.

## Claims

1. A method for accessing and starting a vehicle (1), comprising the following steps:
a) a wireless communication (W3) is established between the vehicle (1) and a personal device (3) of a user (2);
b) a first operation performed by the user (2) with the personal device (3) allows access to the vehicle (1); and
c) a second operation performed by the user (2) starts the vehicle (1).

2. The method according to claim 1, wherein the second operation is performed by using an inner device (21, 22, 23) equipping the vehicle (1).

3. The method according to the previous claim 2, wherein the inner device of the vehicle is a start/stop button (21).

4. The method according to the previous claim 3, wherein performing the first operation starts a countdown, then the second operation must be performed before the end of the countdown to start the vehicle (1).

5. The method according to the previous claim 2, wherein the inner device of the vehicle is a fingerprint reader (22).

6. The method according to the previous claim 2, wherein the inner device of the vehicle is a face recognition system (23).

7. The method according to the previous claim 6, wherein the face recognition system (23) captures a first picture of the user performing the first operation, then the second operation is performed by sitting in the driver seat, then the face recognition system (23) captures a second picture of the user, then the vehicle starts if a match is established between the first picture and the second picture.

8. The method according to claim 1, wherein the second operation is performed on a face recognition system (30) equipping the personal device.

9. The method according to claim 1, wherein the second operation is performed by using the personal device (3) and a NFC reader (43) equipping the vehicle and configured to detect the personal device (3).

10. The method according to the previous claim 9, wherein the NFC reader (43) detects the personal device (3), then a start/stop button (34) is displayed on the personal device (3), then the second operation is performed by pressing said start/stop button (34) on the personal device (3).

11. The method according to the previous claim 9, wherein the second operation is performed by positioning the personal device (3) in a predetermined location (40) inside the vehicle, where the NFC reader (43) detects the personal device (3), thus starting the vehicle (1).

12. The method according to the previous claim 9, wherein the personal device (3) is positioned in a predetermined location (40) inside the vehicle (1), where a NFC reader (43) detects the personal device (3), then the second operation is performed by pressing a start/stop button (21) equipping the vehicle (1).

13. The method according to claim 1, wherein the second operation is performed by using the personal device (3) and a touchscreen (50) equipping the vehicle (1).

14. The method according to the previous claim 13, wherein the personal device (3) sends a personal data to the vehicle (1) when the user (2) performs the first operation, then the touchscreen (50) requests the personal data, then the second operation is performed by entering the personal data on the touchscreen (50).

15. The method according to the previous claim 13, wherein the vehicle (1) sends a pin code to the personal device (3) when the user (2) performs the first operation, then the touchscreen (50) requests the pin code, then the second operation is performed by entering the pin code on the touchscreen (50).
